# EUROPÄISCHE PATENTANMELDUNG

(11) **EP 0 883 128 A2**
(43) Veröffentlichungstag der Anmeldung: **09.12.1998**
(21) Anmeldenummer: 98201815.2
(22) Anmeldetag: 02.06.1998
(51) Int. Cl.: G11B 33/04

(54) **Gehäuse zur Aufnahme eines plattenförmigen Informationsträgers**

(30) Priorität: 05.06.1997 DE 19723503
(71) Anmelder: Philips Patentverwaltung GmbH, 22335 Hamburg (DE); Koninklijke Philips Electronics N.V., 5621 BA Eindhoven (NL)
(72) Erfinder: Grobecker, Hermann, 22335 Hamburg (DE)
(74) Vertreter: von Laue, Hanns-Ulrich

(57) **Zusammenfassung**

Die Erfindung bezieht sich auf ein Gehäuse zur Aufnahme eines plattenförmigen Informationsträgers (15), z.B. einer CD, mit einem Bodenteil (10), einem damit über zwei Eckscharniere (12, 13) verbundenen Deckelteil (11) und mit einer Klemmvorrichtung (14, 14') zur Halterung des Informationsträgers (15). Zur Herstellung einer einfachen, bruchsicheren Scharniereinrichtung wird gemäß der Erfindung vorgeschlagen,
- daß das Deckelteil (11) zwei Scharnierarme (18) aufweist, deren freie Enden (19) um 180° in Richtung auf das Deckelteil (11) gekrümmt und federnd ausgebildet sind,
- daß das Bodenteil (10) den Scharnierarmen (18) angepaßte Eckaussparungen (22) aufweist und
- daß die einander zugewandten freien Enden (19) mit starren Scharnierwänden (24) der Eckaussparungen (22) die Eckscharniere (12, 13) bilden.

## Beschreibung

Die Erfindung bezieht sich auf ein Gehäuse zur Aufnahme eines plattenförmigen Informationsträgers, z.B. einer CD, mit einem Bodenteil, einem damit über zwei Eckscharniere verbundenen Deckelteil und mit einer Klemmvorrichtung zur Halterung des Informationsträgers.

Ein derartiges Gehäuse ist z.B. durch das DE-GM 85 23 194 bekannt geworden. Bei diesem bekannten Gehäuse besitzt das Bodenteil im Scharnierbereich hochstehende Seitenwände, zwischen welche am Deckelteil angebrachte Seitenwände, die einen kleineren gegenseitigen Abstand haben als die Seitenwände des Bodenteils, eingreifen. Die Drehverbindung zwischen dem Boden- und dem Deckelteil erfolgt dabei durch Zapfen in Seitenwänden des einen Teiles, die in Bohrungen von Seitenwänden des anderen Teiles eingreifen. Die Seitenwände des Bodenteils besitzen bei der bekannten Bauart Aussparungen mit abgeschrägten Wänden, in welche entsprechend geformte abgeschrägte Seitenwandungen des Deckelteils eingreifen. Bei der bekannten Bauart besitzt ferner die stirnseitige, den Scharnieren gegenüberliegende Schmalseite des Deckelteils seitlich zwei kraftschlüssige Arretierungen, die in eine gegenläufige Schräge des Bodenteils einrasten. Ferner besitzt das Bodenteil an der den Scharnieren gegenüberliegenden Stirnseite eine zrrückgesetzte Fläche zum leichteren Öffnen des Gehäuses.

Der Erfindung liegt die Aufgabe zugrunde, bei einem Gehäuse der eingangs genannten Art eine besonders zuverlässige, stoß- und bruchsichere Scharniereinrichtung zu gestalten, die eine einfache Herstellung und einen leichten und problemlosen, maschinellen Zusammenbau des Gehäuses gewährleistet.

Diese Aufgabe wird gemäß der Erfindung durch die kennzeichnenden Merkmale des Anspruches 1 gelöst.

Die Scharnierarme sind entstanden durch Verlängerungen des Deckelteiles und durch Krümmung der freien Enden derart, daß die freien Enden bis auf einen geringen Spalt dem Deckelteil gegenüberliegen. Damit wird erreicht, daß diese freien Enden der Scharnierarme ausreichend federnd ausgebildet sind, so daß auf den freien Enden an den Innenseiten angebrachte Zapfen in Löchern von entsprechend geformten Scharnierwänden des Bodenteiles eingreifen können und somit eine Drehung gewährleisten. Die Scharniere liegen somit nicht mehr an den Außenseiten des Gehäuses, sondern geschützt in Eckaussparungen des Bodenteils. Durch die erfindungsgemäße 180°-Krümmung der Scharnierarme ergibt sich eine ideale Möglichkeit, die entsprechenden Ecken des Deckelteils rund auszubilden.

Die Erfindung ist sowohl anwendbar bei einem Gehäuse gemäß Anspruch 2 ohne ein besonderes Tray als auch bei einem Gehäuse gemäß Anspruch 3 mit einem besonderen Tray.

Die Merkmale des Anspruches 4 ermöglichen eine besonders einfache Herstellung. Es wäre jedoch auch möglich, die Zapfen an den Scharnierwänden des Bodenteils und die Bohrungen an den freien Scharnierarmen auszubilden. Auch könnten statt der Bohrungen keilförmige Öffnungen vorgesehen sein, die ein Einschnappen von oben her ermöglichen.

Die Merkmale des Anspruches 5 ermöglichen ein Öffnen bis zu einem Winkel von etwa 180° bzw. 185°. Damit wird ein vollständiges Umklappen des Deckels und damit ein Herausfallen eines in dem Deckel untergebrachten Textheftes vermieden.

Durch die Merkmale des Anspruches 6 wird erreicht, daß das Deckelteil ohne Behinderung durch den vorstehenden Anschlag geschlossen werden kann.

Durch die Merkmale des Anspruches 7 wird eine besonders stabile, bruchsichere Lagerung für die Scharniere ermöglicht.

Durch die Merkmale des Anspruches 8 wird erreicht, daß die als Griffleiste ausgebildete Wand des Hohlraumes urmittelbar entsprechenden Wandungsteilen des Deckels gegenüberliegt, so daß damit bei evtl. Stößen auf die Seite des geschlossenen Gehäuses eine zusätzliche Bruchsicherheit des Scharniers gegeben ist.

Durch die Merkmale des Anspruches 9 kann zur zusätzlichen Stabilisierung ein entsprechend ausgebildeter Einsatz in den Hohlraum eingebracht werden. Eine andere Möglichkeit besteht darin, diesen Einsatz zur Aufnahme besonderer zusätzlicher Bauelemente, z.B. Diebstahlsicherungsbauteile oder verkaufsfördernde Beigaben zum Produkt, auszubilden.

Die Merkmale des Anspruches 10 zeigen eine einfache Möglichkeit, einen derartigen Behälter, der z.B. Informationsmaterial, Diebstahlsicherungselemente oder dergl. aufweisen kann, einfach auszubilden, so daß er zuverlässig in dem genannten Hohlraum gehalten werden kann. Wenn dabei z.B. stirnseitig vorgesehene Rastmittel, z.B. widerhakenförmige Elemente, im Zusammenwirken mit entsprechend geformten Öffnungen vorgesehen sind, ist ein derartig ausgebildeter Einsatz nach dem Einsetzen und Einrasten praktisch ohne Gewalteinwirkung und Zerstörung nicht wieder aus dem Hohlraum zu entfernen. Dies ist besonders vorteilhaft, wenn ein derartiger wannenförmiger Behälter Mittel zur Diebstahlsicherung enthält.

In der Zeichnung sind in den Fig. 1 bis 7 Ausführungsbeispiele des Gegenstandes gemäß der Erfindung schematisch dargestellt.
Fig. 1 zeigt eine Draufsicht eines aus einem Boden- und einem Deckelteil bestehenden Gehäuses, wobei die untere Hälfte das geschlossene Gehäuse und die obere Hälfte das geöffnete Gehäuse zeigt mit einem auf der linken Seite zur Hälfte dargestellten Deckel,
Fig. 2 zeigt, zum Teil im Schnitt, eine vergrößerte Darstellung Z₁ gemäß Fig. 1,
Fig. 3 zeigt eine nochmal vergrößerte, perspektivische Darstellung dieses Ausschnittes Z₁, jedoch aus einer Blickrichtung wie in Fig. 4,
Fig. 4 zeigt eine perspektivische Darstellung von oben auf das geschlossene Gehäuse,
Fig. 5 zeigt eine perspektivische Darstellung von unten auf das geschlossene Gehäuse,
Fig. 6 zeigt einen Ausschnitt Z₂ gemäß Fig. 5, und
Fig. 7 zeigt ein mit einer Klemmvorrichtung versehenes Tray zum Einsatz in ein Gehäuse.

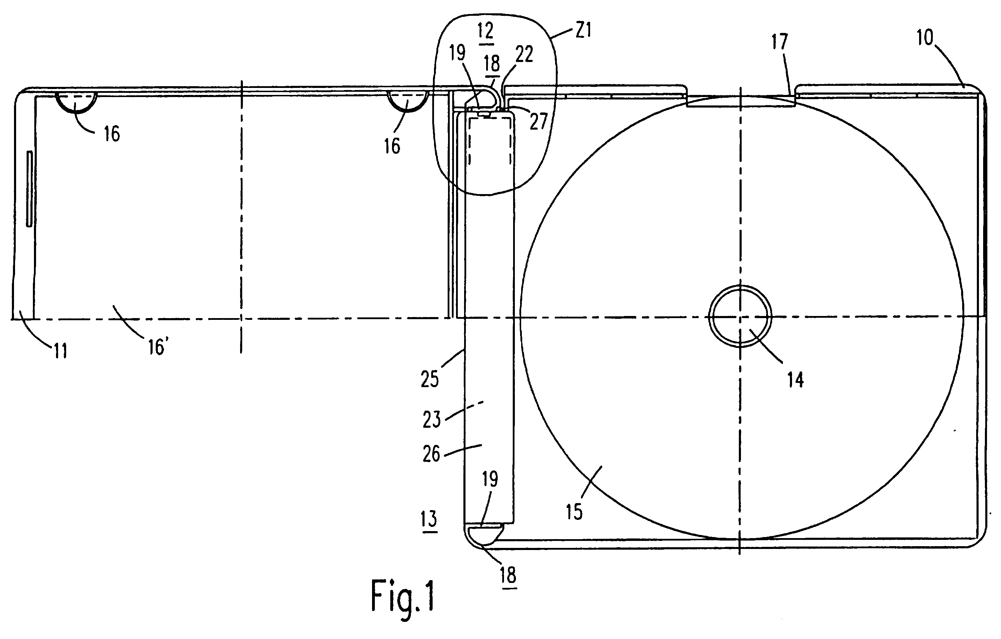

Gemäß Fig. 1 besteht das zweiteilige Gehäuse aus einem Bodenteil 10 und einem Deckelteil 11, die durch zwei Eckscharniere 12, 13 gelenkig miteinander verbunden sind. Das Bodenteil besitzt eine zentral angeordnete Klemmvorrichtung 14 zur klemmenden Halterung einer CD 15. Mit 16 sind am Deckelteil 11 angebrachte, hochstehende Laschen bezeichnet, die zur Halterung eines eingeschobenen Textheftes 16' dienen. Griffmulden 17 erleichtern das Herausnehmen der CD 14 aus dem Bodenteil 10.

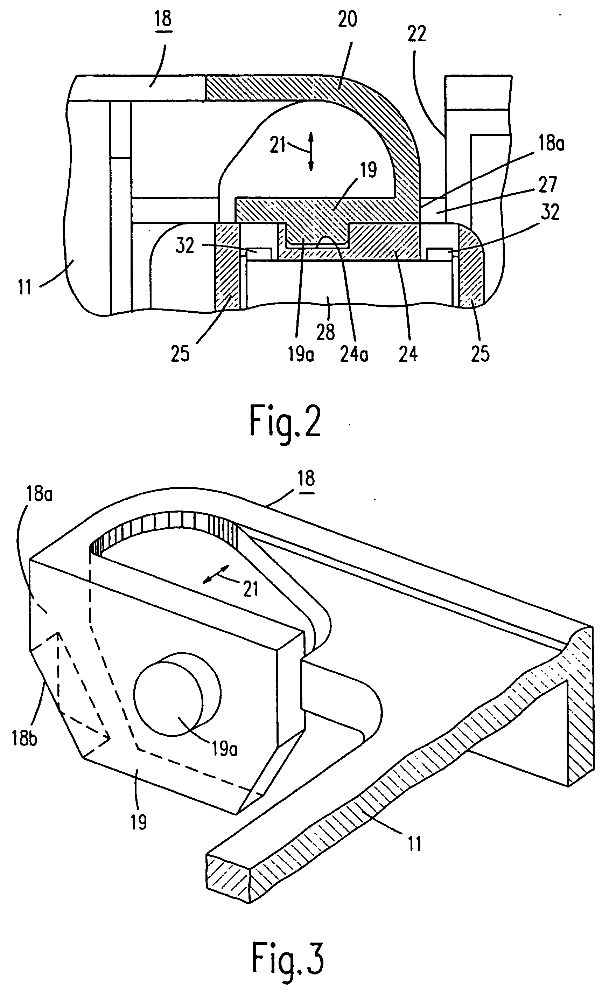

Gemäß Fig. 2 und 3 besitzt jedes der Eckscharniere 12, 13 einen Scharnierarm 18, dessen freies Ende 19 um 180° in Richtung auf das Deckelteil 11 gekrümmt ist. Dadurch ergibt sich einmal die Möglichkeit, das Deckelteil in dem Eckbereich 20 mit einer handgerechten Krümmung zu versehen, zum anderen wird das freie Ende 19 dadurch in Richtung 21 federnd.

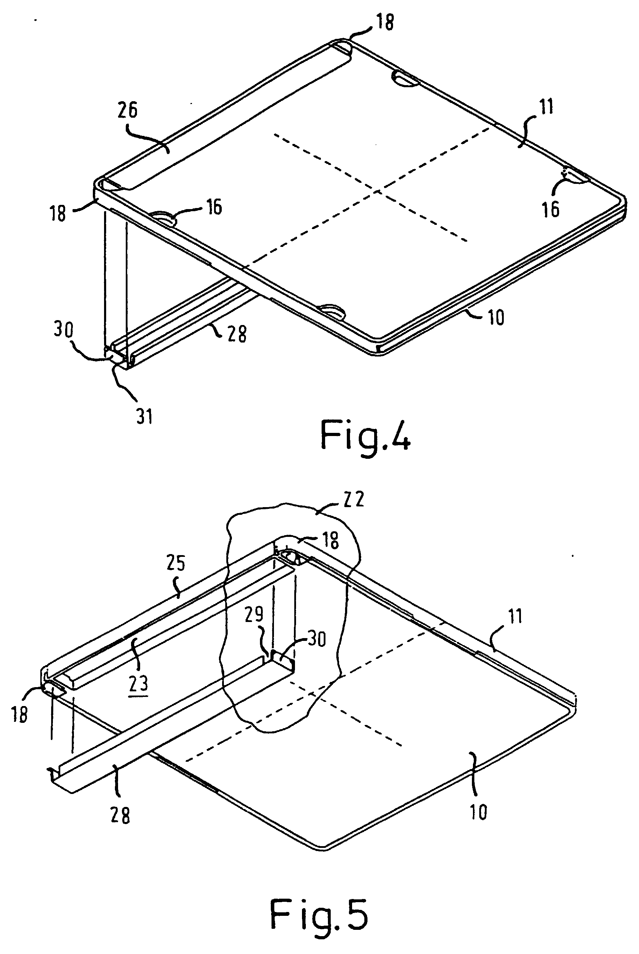

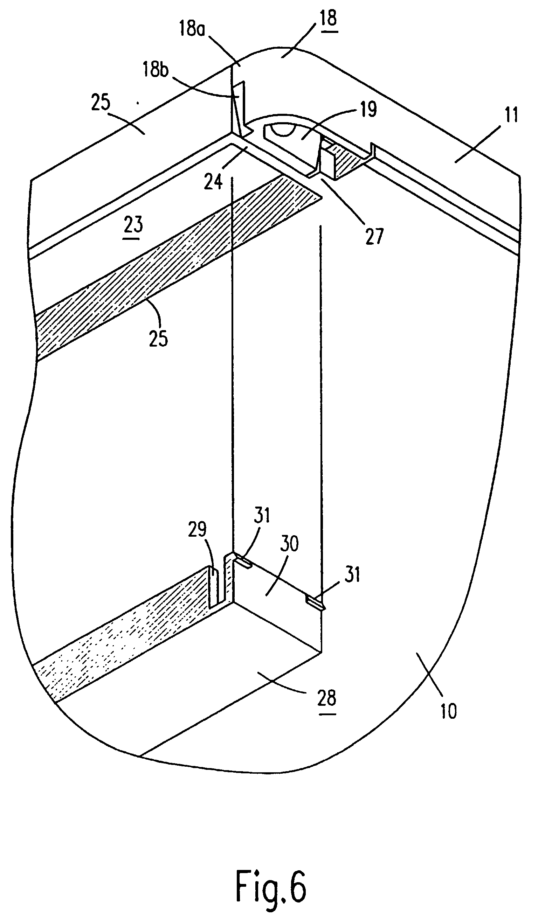

Zur bündigen Aufnahme der beiden Eckscharniere 12, 13 ist das Bodenteil 10 mit Eckaussparungen 22 versehen, zwischen welchen sich ein nach unten offener, kastenförmiger Hohlraum 23 erstreckt (Fig. 5 und 6). Der Hohlraum 23 wird stirnseitig von Scharnierwänden 24, seitlich von Seitenwänden 25 und oben von einer Griffleiste 26 begrenzt, die bei geschlossenem Gehäuse mit dem Deckelteil 11 in einer Ebene liegt und mit dieser bündig abschließt. Die Eckscharniere besitzen im vorliegenden Beispiel Zapfen 19a an den freien Enden 19, die in Bohrungen 24a der Scharniewände 24 eingreifen.

In den Ecken der Eckaussparungen 22 ist jeweils ein mit der Außenoberfläche des Bodenteils 11 bündig abschließender Anschlag 27 vorgesehen, der bei geöffnetem Deckel 11 in einer Stellung von etwa 180° bis 185° an der Stelle 18a des Scharnierarmes anliegt. Eine Einlaufschräge 18b verhindert, daß die Schließbewegung durch den Anschlag 27 blockiert wird. Der Anschlag 27 und die Einlaufschräge 18b sind besonders deutlich aus Fig. 6 zu erkennen.

Fig. 4, 5 und 6 zeigen eine Möglichkeit, einen nach oben offenen wannenförmigen Behälter 28 in den Hohlraum 23 einzubringen. Dieser Behälter 28 ist durch Kerben 29 mit federnden Stirnwänden 30 versehen, die Widerhaken 31 tragen. Beim Einbringen des Behälters 28 in den Hohlraum 23 verhaken die Widerhaken mit entsprechenden Ausnehmungen 32 an den Innenseiten der Scharnierwände 24. Der Behälter 28 schließt den Hohlraum 23 und dient zur Aufnahme verschiedenartiger Artikel, z.B. von sogenannten Glitterstäben, die eine Flüssigkeit enthalten, in welcher bestimmte Teilchen schweben. Ferner kann in einem derartigen Behälter z.B. eine Diebstahlsicherung eingebracht werden. Dies ist besonders vorteilhaft, da der Behälter 28 nach dem Einbringen praktisch nicht mehr herausgenommen werden kann, ohne daß Teile zerstört werden. Ferner können in dem Behälter 28, der z.B., wie auch das Boden- und das Deckelteil, aus durchsichtigem Kunststoff besteht, Papierstreifen mit bestimmten Informationen untergebracht werden. Derartige Streifen können auch um den Behälter gewickelt und dann mit dem Behälter in den Hohlraum 23 eingebracht werden.

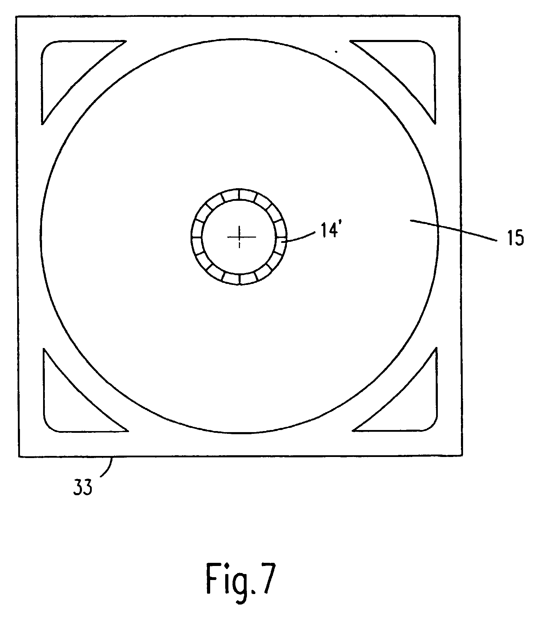

Fig. 7 zeigt in einer Draufsicht ein Tray 33, das mit einer Klemmvorrichtung 14' zur Halterung eines Informationsträgers (15) versehen ist und von dem Gehäuse aufgenommen werden kann.

## Patentansprüche

1. Gehäuse zur Aufnahme eines plattenförmigen Informationsträgers (15), z.B. einer CD, mit einem Bodenteil (10), einem damit über zwei Eckscharniere (12, 13) verbundenen Deckelteil (11) und mit einer Klemmvorrichtung (14, 14') zur Halterung des Informationsträgers (15), dadurch gekennzeichnet,
- daß das Deckelteil (11) zwei Scharnierarme (18) aufweist, deren freie Enden (19) um 180° in Richtung auf das Deckelteil (11) gekrümmt und federnd ausgebildet sind,
- daß das Bodenteil (10) den Scharnierarmen (18) angepaßte Eckaussparungen (22) aufweist und
- daß die einander zugewandten freien Enden (19) der Scharnierarme (18) mit starren Scharnierwänden (24) der Eckaussparungen (22) die Eckscharniere (12, 13) bilden.

2. Gehäuse nach Anspruch 1, dadurch gekennzeichnet, daß die Klemmvorrichtung (14) im Bodenteil (10) integriert ist.

3. Gehäuse nach Anspruch 1, dadurch gekennzeichnet, daß die Klemmvorrichtung (14') an einem besonderen, von dem Gehäuse aufgenommenen Tray (33) ausgebildet ist.

4. Gehäuse nach einem der Ansprüche 1 bis 3, dadurch gekennzeichnet, daß die freien Enden (19) der Scharnierarme (18) mit nach innen ragenden Zapfen (19a) zum Eingriff in angepaßte Bohrungen (24a) der Scharnierwände (24) versehen sind.

5. Gehäuse nach einem der Ansprüche 1 bis 3, dadurch gekennzeichnet, daß in der Ecke jeder Eckaussparung (22) nahe der Außenoberfläche des Bodenteils (10) ein vorstehender Anschlag (27) angeordnet ist, der bei einer ca. 180° Öffnungsstellung des Deckelteils (11) an der Stirnseite eines jeden Scharnierarmes (18) in einem Bereich (18a) nahe der Außenoberfläche des Deckelsteils (11) anliegt.

6. Gehäuse nach Anspruch 5, dadurch gekennzeichnet, daß die Stirnseite des Scharnierarmes (18) unterhalb des Anschlagbereiches (18a) für den Anschlag (27) jeweils mit einer Einlaufschräge (18b) versehen ist.

7. Gehäuse nach einem der Ansprüche 1 bis 3, dadurch gekennzeichnet, daß sich zwischen den Eckaussparungen (22) des Bodenteils (10) ein nach oben oder nach unten offener, kastenförmiger Hohlraum (23) erstreckt, dessen stirnseitige Begrenzungswände (24) von den beiden Scharnierwänden der Eckaussparungen (22) gebildet werden.

8. Gehäuse nach Anspruch 7, dadurch gekennzeichnet, daß bei einem nach unten offenen Hohlraum (23) die der offenen Seite des Hohlraums gegenüberliegende Wand (26) als Griffleiste ausgebildet ist, die bei geschlossenem Gehäuse mit dem Deckelteil (11) in einer Ebene liegt.

9. Gehäuse nach Anspruch 7, dadurch gekennzeichnet, daß der Hohlraum (23) mit Rastmitteln (32) zur Aufnahme und Halterung eines dem Hohlraum (27) angepaßten Einsatzes (28) ausgebildet ist.

10. Gehäuse nach Anspruch 9, dadurch gekennzeichnet, daß als Einsatz ein zur Einsatzseite hin offener, wannenförmiger Behälter (28) vorgesehen ist, dessen stirnseitige Wände (24) federnd ausgebildet und mit Rastmitteln (31) versehen sind, die mit Rastmitteln (32) an den Scharnierwänden (24) zusammenwirken.
